# EUROPÄISCHE PATENTANMELDUNG

(11) **EP 4 386 136 A1**
(43) Veröffentlichungstag der Anmeldung: **19.06.2024**
(21) Anmeldenummer: 23208446.7
(22) Anmeldetag: 08.11.2023
(51) Int. Cl.: E01B 3/46, E01B 9/68

(54) **SCHWELLENSOHLE**

(30) Priorität: 13.12.2022 AT 2282022
(71) Anmelder: Getzner Werkstoffe Holding GmbH, 6706 Bürs (AT)
(72) Erfinder: Augustin, Andreas, 6714 Nüziders (AT)
(74) Vertreter: Torggler & Hofmann Patentanwälte - Rankweil

(57) **Zusammenfassung**

Schwellensohle (1) zur Befestigung an einer, Schienen (2) gegenüberliegenden Unterseite einer Gleisschwelle (3), wobei die Schwellensohle (1) zumindest eine erste, vorzugsweise porös ausgebildete, Materialkomponente (4) und zumindest eine, von der ersten Materialkomponente (4) verschiedene, zweite, porös ausgebildete Materialkomponente (5) aufweist, wobei die erste Materialkomponente (4) elastischer als die zweite Materialkomponente (5) und die zweite Materialkomponente (5) plastischer als die erste Materialkomponente (4) ausgebildet ist, wobei die erste Materialkomponente (4) ausschließlich in einer ersten Schicht (6) der Schwellensohle (1) und die zweite Materialkomponente (5) ausschließlich in einer zweiten Schicht (7) der Schwellensohle (1) angeordnet ist.

## Beschreibung

Die vorliegende Erfindung betrifft eine Schwellensohle zur Befestigung an einer, Schienen gegenüberliegenden Unterseite einer Gleisschwelle, wobei die Schwellensohle zumindest eine erste, vorzugsweise porös ausgebildete, Materialkomponente und zumindest eine, von der ersten Materialkomponente verschiedene, zweite, porös ausgebildete Materialkomponente aufweist, wobei die erste Materialkomponente elastischer als die zweite Materialkomponente und die zweite Materialkomponente plastischer als die erste Materialkomponente ausgebildet ist.

Des Weiteren betrifft die Erfindung eine Gleisanlage mit zumindest einer Gleisschwelle, auf der Gleisschwelle angeordnete Schienen und zumindest einer unter der Gleisschwelle angeordneten Schwellensohle der oben genannten Art.

Derartige Schwellensohlen werden bei Gleistrassen zur Schwingungsdämpfung, Schotterschonung und zur Verbesserung der lateralen Kraftübertragung verwendet, wobei die Schwellensohlen an der Unterseite von Schienen tragenden Gleisschwellen angeordnet werden.

Schwellensohlen sind bereits aus dem Stand der Technik bekannt. So zeigt beispielsweise die Schrift WO 2019/157540 A1 eine Schwellensohle mit zumindest einer elastischen Schicht mit darin verteilt angeordneten Körnern eines Korkgranulats und eines zelligen synthetischen Elastomers. Das Korkgranulat ist dabei relativ steif und plastisch, wohingegen, das Elastomer relativ biegsam und elastisch ist. Die Kombination beider Materialkomponenten gewährleistet sowohl eine gewisse elastische Dämpfung als auch eine formschlüssige Verzahnung, insbesondere im Hinblick auf eine bestmögliche laterale Kraftübertragung, zwischen der Gleisschwelle und dem Gleisschotter.

Nachteilig bei derartigen Schwellensohlen ist jedoch, dass aufgrund der Vermischung der elastischen Materialkomponente und der plastischen Materialkomponente, insbesondere der Vermischung von Kork- und Elastomer-Körnern, innerhalb einer Schicht, nicht das volle Potential jeder einzelnen Materialkomponente ausgeschöpft werden kann.

Die Aufgabe der vorliegenden Erfindung ist es daher, eine zum Stand der Technik verbesserte Schwellensohle bereitzustellen, bei welcher die jeweiligen Materialeigenschaften bestmöglich ausgenützt werden.

Diese Aufgabe wird durch die Merkmale des Anspruchs 1 gelöst.

Anspruch 1 betrifft dabei eine Schwellensohle der eingangs genannten Art, bei welcher die erste Materialkomponente ausschließlich in einer ersten Schicht der Schwellensohle und die zweite Materialkomponente ausschließlich in einer zweiten Schicht der Schwellensohle angeordnet ist.

Der große Vorteil der Erfindung ist, dass die Eigenschaften der ersten, elastischeren Materialkomponente und der zweiten, plastischeren Materialkomponente in separaten bzw. voneinander getrennten Schichten besser ausgenutzt und auf die jeweilige Aufgabenstellung hin optimiert werden können.

So können die Dämpfungseigenschaften der ersten, elastischeren Schicht deutlich besser optimiert werden, wenn dort nur die erste, elastischere Materialkomponente vorhanden ist.

Das für die Schotterschonung, also das Festhalten des Gleisschotters unter der Gleisschwelle, wichtige formschlüssige Eindringen des Gleisschotters in die Schwellensohle kann wesentlich besser optimiert werden, wenn in der zweiten, dem Gleisschotter zugewandten Schicht nur die zweite, plastischere Materialkomponente vorhanden ist.

Durch die plastische Verformung der zweiten Materialkomponente in der zweiten Schicht entsteht dabei günstigerweise eine größere Kontaktfläche zwischen der Gleisschwelle und dem Gleisschotter, was eine günstige Kraft- bzw. Spannungsverteilung und -übertragung bedingt.

So kann eine erfindungsgemäße Schwellensohle die eingangs erwähnten Zwecke deutlich besser erfüllen als herkömmliche, dem Stand der Technik entsprechende Schwellensohlen.

Die zumindest eine zweite Materialkomponente ist porös. Die zumindest eine erste Materialkomponente kann porös oder kompakt, also praktisch ohne jegliche interne Hohlräume ausgebildet sein.

Eine poröse Materialkomponente kann, soweit die Porosität durch einen Schäumprozess entsteht, auch als eine geschäumte Materialkomponente bezeichnet werden.

In einer bevorzugten Ausführungsvariante ist die zumindest eine erste Materialkomponente genau eine erste Materialkomponente.

In einer bevorzugten Ausführungsvariante ist die zumindest eine zweite Materialkomponente genau eine zweite Materialkomponente.

Das heißt, es ist bevorzugt vorgesehen, dass pro Schicht jeweils genau eine einzige Materialkomponente vorgesehen ist. Diese Variante ist günstig bei einer Entsorgung der Schwellensohle, da die einzelnen Materialkomponenten durch Trennen der Schichten voneinander relativ einfach und vollständig voneinander getrennt und somit besonders einfach recycelt werden können.

Sind zwei oder mehr erste Materialkomponenten vorgesehen, dann sind alle ersten Materialkomponenten elastischer als die zumindest eine zweite Materialkomponente.

Sind zwei oder mehr zweite Materialkomponenten vorgesehen, dann sind alle zweiten Materialkomponenten plastischer als die zumindest eine erste Materialkomponente.

Die zumindest eine erste Materialkomponente kann ein entsprechend elastisches Polyurethan sein, wie es z.B. unter den Handelsnamen Sylodyn und/oder Sylomer am Markt vertrieben wird.

Als die zweite Materialkomponente kann beispielsweise Kork oder entsprechend plastisches Polyurethan zum Einsatz kommen. Es können in der zweiten Schicht z.B. auch zwei zweite Materialkomponenten in Form von Kork und entsprechend plastischem Polyurethan vorhanden sein.

Weitere vorteilhafte Ausführungsformen der Erfindung werden in den abhängigen Ansprüchen definiert.

Es ist besonders bevorzugt vorgesehen, dass in einer Betriebsstellung der Schwellensohle die erste Schicht der Schwellensohle der Gleisschwelle zugewandt ist und die zweite Schicht von der Gleisschwelle abgewandt ist, womit die zweite Schicht dem Gleisschotter zugewandt ist.

Es ist bevorzugt vorgesehen, dass die erste Schicht und die zweite Schicht aneinander anliegend vollflächig miteinander verbunden sind.

Es ist bevorzugt vorgesehen, dass die vollflächige Verbindung zwischen der ersten Schicht und der zweiten Schicht stoffschlüssig, beispielsweise in Form einer Verklebung oder Verschweißung ausgeführt, ist.

Als Klebstoff oder Bindemittel zum Verbinden der ersten Schicht mit der zweiten Schicht und/oder mit weiteren Schichten und/oder der Schwellensohle mit der Gleisschwelle können z.B. ein Ein-Komponenten-Polyurethanbinder wie z.B. Isocyanat, aber auch ein Zwei-Komponenten-Polyurethanbinder oder andere Bindemittel oder Mischungen aus diesen Bindemitteln verwendet werden.

Es ist aber auch denkbar, dass die vollflächige Verbindung zwischen der ersten Schicht und der zweiten Schicht kraftschlüssig und/oder, beispielsweise mittels Verzahnungen, formschlüssig verbunden ist.

Es ist bevorzugt vorgesehen, dass die erste Schicht aus miteinander verbundenen, insbesondere miteinander verklebten, Granulatkörnern aufgebaut ist und die Granulatkörner aus der zumindest einen, ersten Materialkomponente bestehen.

Es ist bevorzugt vorgesehen, dass die zweite Schicht aus miteinander verbundenen, insbesondere miteinander verklebten, Granulatkörnern aufgebaut ist und die Granulatkörner aus der zumindest einen, zweiten Materialkomponente bestehen.

Es ist bevorzugt vorgesehen, dass die Granulatkörner aus der zumindest einen ersten Materialkomponente, wie z.B. entsprechend elastischem Polyurethan, in der ersten Schicht eine Korngröße im Bereich von 1 mm bis 20 mm, vorzugsweise von 1 mm bis 12 mm, aufweisen.

Es ist bevorzugt vorgesehen, dass die Granulatkörner der zweiten Materialkomponente der zumindest einen zweiten Materialkomponente, wie z.B. Kork, in der zweiten Schicht eine Korngröße im Bereich von 0,1 mm bis 10 mm, vorzugsweise von 0,5 mm bis 8 mm, aufweisen.

Es kann aber auch vorgesehen sein, dass die Granulatkörner der zweiten Materialkomponente der zweiten Schicht eine Korngröße im Bereich von 1 mm bis 20 mm, vorzugsweise von 1 mm bis 12 mm, aufweisen, insbesondere dann, wenn es sich bei der zweiten Materialkomponente um entsprechend plastisches Polyurethan handelt.

Zu den Begriffen Granulat bzw. Korn sei angemerkt, dass unter einem Granulat eine Substanz verstanden werden kann, welche sich aus einer Vielzahl bzw. Ansammlung von Körnern bzw. Granulatkörnern zusammensetzt, welche durch geeignete Maßnahmen miteinander verbindbar sind. Ein Korn bzw. Granulatkorn ist also als ein kleiner Einzelkörper eines Granulates zu verstehen, welcher auch als Flocke, Stückchen, Teilchen oder dergleichen bezeichnet werden kann. Der Begriff des Korns sagt per se nichts über seine Größe und/oder Form aus.

Zum Verbinden der Granulatkörner können diese insbesondere miteinander verklebt oder verschweißt werden. Zum Verkleben können insbesondere die oben genannten Kleber verwendet werden, mit denen auch die erste Schicht und die zweite Schicht miteinander verklebt werden können.

Bei den Varianten, bei denen die erste und/oder die zweite Schicht der Schwellensohle miteinander verbundene Granulatkörner aufweisen, können besonders gut recycelte zu entsprechenden Granulatkörnern gemahlene Ausgangsmaterialien wiederverwendet werden.

Abweichend von den oben genannten Granulatvarianten kann vorgesehen sein, dass die erste Schicht als eine in sich homogene Schicht bestehend aus der zumindest einen, ersten Materialkomponente als Monomaterial ausgebildet ist.

Ebenso kann vorgesehen sein, dass die zweite Schicht als eine in sich homogene Schicht bestehend aus der zumindest einen, zweiten Materialkomponente als Monomaterial ausgebildet ist.

Unter einem Monomaterial ist insbesondere ein, insbesondere sortenreines, Material zu verstehen, welches nicht aus miteinander verbundenen Granulatkörnern sondern als in sich durchgehendes Material ausgebildet ist, in dem keine Körnung vorhanden ist.

Abweichend von der oben ausgeführten Verwendung von recyceltem Material können prinzipiell die zumindest eine erste Materialkomponente und/oder die zumindest eine zweite Materialkomponente, egal ob es sich um Granulate oder Monomaterialien handelt, auch neu hergestellt bzw. gegossen werden.

Der Vollständigkeit halber wird darauf hingewiesen, dass alle möglichen Kombinationen von Schichten aus Monomaterial und aus Granulat realisiert werden können. So können die erste Schicht und die zweite Schicht einer erfindungsgemäßen Schwellensohle jeweils aus Monomaterial oder jeweils aus Granulat aufgebaut sein. Es kann sich bei der ersten Schicht der erfindungsgemäßen Schwellensohle aber auch um Monomaterial handeln, während die zweite Schicht dieser erfindungsgemäßen Schwellensohle aus Granulat aufgebaut ist, und umgekehrt.

Es ist besonders bevorzugt vorgesehen, dass die erste Schicht einen kleineren Druckverformungsrest als die zweite Schicht aufweist.

Es ist bevorzugt vorgesehen, dass die erste Schicht einen Druckverformungsrest kleiner oder gleich 8 %, vorzugsweise kleiner oder gleich 6 %, aufweist.

Es ist bevorzugt vorgesehen, dass die zweite Schicht einen Druckverformungsrest von mindestens 10 %, vorzugsweise bis zu 24,5 %, aufweist.

Der Druckverformungsrest ist dabei ein Parameter, welcher beschreibt, wie weit sich eine Materialkomponente, wie z.B. ein Elastomer, nach einer Belastung wieder zurück in seine Ausgangsform zurückfindet, bzw. wieviel plastische Verformung nach einer Entlastung übrigbleibt. Die Ermittlung des Druckverformungsrests erfolgt dabei vorzugsweise gemäß DIN EN ISO 1856:2020-11 mit dem Verfahren C (Druckverformung unter speziell festgelegten Bedingungen), bei welchem eine Lagerung bei einer Temperatur von 23+-2 °C und einer relativen Luftfeuchte von 50+-5 % für 72 Stunden und 25 % Verformung des Prüfkörpers durchgeführt wird. Die Probengeometrie bei der Bestimmung des Druckverformungsrests in dieser Art liegt günstigerweise bei 25 mm x 25 mm x 12,5 mm.

Anzumerken ist hierzu, dass eine Differenz zweier Druckverformungsrest-Werte in der Größenordnung von 1-2 % einem deutlich unterschiedlichen Verformungsverhalten entspricht. Das heißt auch, dass eine eindeutige Differenzierung zwischen elastischem und plastischem Materialverhalten besteht.

Die poröse und plastischere, zweite Schicht kann auch als eine Art Lastverteilungsschicht angesehen werden.

Die elastischen bzw. plastischen Eigenschaften ergeben sich insbesondere aus einem Zusammenspiel mehrerer Parameter, wie z.B. der Porosität, dem Grundmaterial, der Dichte, der Zelligkeit, dem Herstellungsverfahren, u.v.m. Dies ist an sich bekannt.

Betreffend die Dichte der ersten Schicht und/oder der zweiten Schicht kann es vorgesehen sein, dass die Dichte der ersten Schicht günstigerweise im Bereich von 150 kg/m3 bis 1150 kg/m3, vorzugsweise im Bereich von 250 kg/m3 bis 1150 kg/m3, liegt und/oder die Dichte der zweiten Schicht günstigerweise im Bereich von 100 kg/m3 bis 800 kg/m3, vorzugsweise im Bereich von 100 kg/m3 bis 600 kg/m3, liegt.

Es ist bevorzugt vorgesehen, dass die erste Materialkomponente ein, insbesondere elastisches, Polyurethan, vorzugsweise mit einer Porosität im Bereich von 0 % bis 90 %, besonders bevorzugt mit einer Porosität im Bereich von 0,1 % bis 85 %, ist.

Das heißt, die erste Materialkomponente kann aus einem Polyurethan-Granulat und/oder porösem homogenen Polyurethan, aber auch aus kompaktem Polyurethan oder sonstigem entsprechend elastischem-Elastomer ausgebildet sein.

Es ist bevorzugt vorgesehen, dass die zweite Materialkomponente ein poröses Polyurethan, vorzugsweise mit einer Porosität im Bereich von 2,5 % bis 90 %, und/oder dass die zweite Materialkomponente ein poröser Kork, vorzugsweise mit einer Porosität im Bereich von 2,5 % bis 90 %, besonders bevorzugt mit einer Porosität im Bereich von 5 % bis 75 %, ist.

Die bevorzugte Mindestporosität der zumindest einen zweiten Schicht von 2,5 % stellt besonders gut eine ausreichende Volumensverdrängung bzw. Zusammendrückbarkeit der zweiten Schicht sicher, sodass das jeweilige Gleisschotter-Korn formschlüssig und/oder dauerhaft in die zweite Schicht eindringen und durch plastische Verformung der zweiten Schicht in die Schwellensohle eingebettet werden kann.

Es ist besonders bevorzugt vorgesehen, dass die erste Schicht eine Dicke im Bereich von 3 mm bis 15 mm, vorzugsweise von 4 mm bis 12 mm, aufweist.

Es ist besonders bevorzugt vorgesehen, dass die zweite Schicht eine Dicke im Bereich von 3 mm bis 10 mm, vorzugsweise von 4 mm bis 8 mm, aufweist.

Es kann auch vorgesehen sein, dass die erste Schicht eine Dicke aufweist, welche zwischen 40 % und 85 %, vorzugsweise zwischen 50 % und 75 %, einer Gesamtdicke der Schwellensohle beträgt.

Es kann weiters vorgesehen sein, dass die zweite Schicht eine Dicke aufweist, welche zwischen 15 % und 60 %, vorzugsweise zwischen 25 % und 50 %, der Gesamtdicke der Schwellensohle beträgt.

Neben der erfindungsgemäßen Schwellensohle an sich wird auch Schutz begehrt für eine Gleisanlage mit zumindest einer Gleisschwelle und auf der Gleisschwelle angeordneten Schienen und zumindest einer unter der Gleisschwelle angeordneten erfindungsgemäßen Schwellensohle, wobei die erste Schicht der Schwellensohle der Gleisschwelle zugewandt ist und die zweite Schicht der Schwellensohle von der Gleisschwelle abgewandt ist. Die zweite Schicht ist damit dem Gleisschotter zugewandt, wenn die Gleisanlage auf einem Schotterbett lagert.

Weitere Vorteile und Einzelheiten vorteilhafter Varianten der Erfindung ergeben sich aus den Figuren sowie der dazugehörigen Figurenbeschreibung. Dabei zeigen:
- Fig. 1: einen schematisierten Schnitt durch ein Ausführungsbeispiel einer Gleisanlage,
- Fig. 2: einen vergrößerten Ausschnitt des Ausführungsbeispiels einer Gleisanlage aus Fig. 1 im Bereich A, und
- Fig. 3-6: schematisierte Schnittdarstellungen von vier Ausführungsbeispielen einer Schwellensohle.

Zunächst sei gesagt, dass alle Figuren schematische Darstellungen sind, welche keinerlei Maßstabstreue aufweisen.

So sind z.B. alle Schichtdicken und ihre relativen Dimensionen zueinander so gewählt, dass sie sich grafisch gut darstellen lassen.

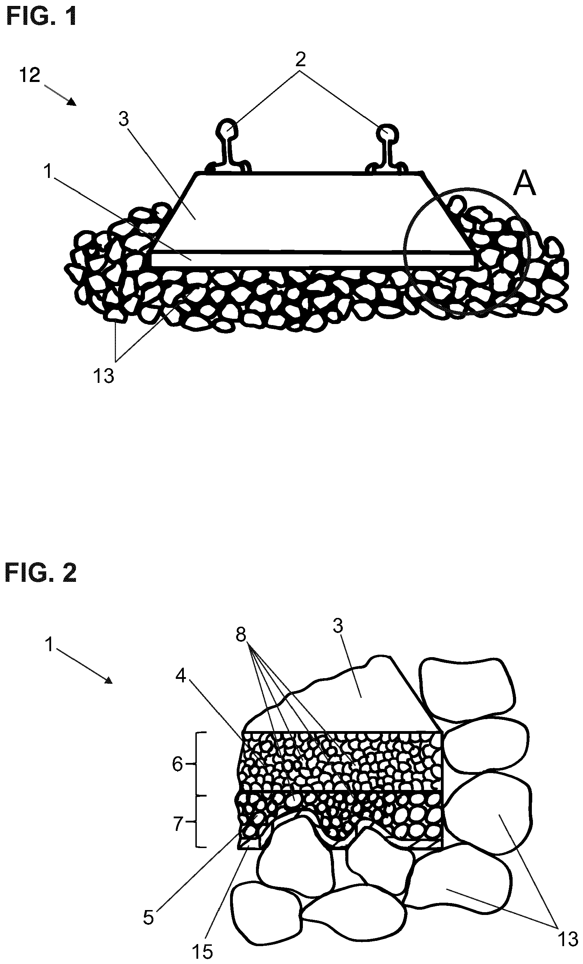

Die Fig. 1 zeigt einen Schnitt durch ein Ausführungsbeispiel einer Gleisanlage 12 mit zumindest einer Gleisschwelle 3 und auf der Gleisschwelle 3 angeordnete Schienen 2 und zumindest eine unter der Gleisschwelle 3 angeordnete, vorzugsweise befestigte, Schwellensohle 1, wobei sich die Schwellensohle 1 in der üblichen Betriebsstellung befindet.

Bei dieser Darstellung ist die Schwellensohle 1 als eine Einheit ohne ihre einzelnen Schichten gezeigt. Die einzelnen Schichten sind erst in den folgenden Figuren dargestellt.

Die Fig. 2 zeigt einen Ausschnitt bzw. eine Nahaufnahme der in der Fig. 1 gezeigten Gleisanlage 12 mit dem ersten Ausführungsbeispiel einer Schwellensohle 1 im Bereich A, wobei die Schwellensohle 1 zumindest eine erste Materialkomponente 4 und eine von der ersten Materialkomponente 4 verschiedene zumindest eine zweite, porös ausgebildete Materialkomponente 5 aufweist, wobei die erste Materialkomponente 4 elastischer als die zweite Materialkomponente 5 und die zweite Materialkomponente 5 plastischer als die erste Materialkomponente 4 ausgebildet ist, und wobei die erste Materialkomponente 4 ausschließlich in einer ersten Schicht 6 der Schwellensohle 1 und die zweite Materialkomponente 5 ausschließlich in einer zweiten Schicht 7 der Schwellensohle 1 angeordnet ist.

Bei diesem Ausführungsbeispiel der Schwellensohle 1 ist die erste Schicht 6 der Gleisschwelle 3 zugewandt und die zweite Schicht 7 von der Gleisschwelle 3 abgewandt und dem Gleisschotter 13 zugewandt.

Bei dieser Darstellung gemäß Fig. 2 ist gut zu erkennen, wie die Gleisschotter-Körner des Gleisschotters 13 in die zweite, poröse und plastischere Schicht 7 eindringen können bzw. die zweite Schicht 7 verformen können und so einen bestmöglichen und auch dauerhaften Formschluss zwischen Schwellensohle 1 und Gleisschotter 13 bedingen. Durch diesen Formschluss werden die Gleisschotter-Körner im Sinne einer möglichst guten, eingangs genannten, Schotterschonung besonders gut und dauerhaft unter der Gleisschwelle 3 festgehalten.

Dabei ist bevorzugt vorgesehen, dass die zweite Schicht 7 einen Druckverformungsrest von mindestens 10 %, vorzugsweise bis zu 24,5 %, aufweist.

Die ausschließlich in der ersten Schicht 6 vorkommende erste, elastischere Materialkomponente 4 sorgt für eine besonders gute Vibrationsdämpfung.

Bei diesem Ausführungsbeispiel der Schwellensohle 1 bestehen die erste Schicht 6 und die zweite Schicht 7 jeweils aus miteinander verbundenen, insbesondere miteinander verklebten, Granulatkörnern 8.

Bei diesem Ausführungsbeispiel ist an der Unterseite der Schwellensohle 1 eine Schutzschicht 15 zum Schutz der Schwellensohle 1 angeordnet, wobei die Schutzschicht 15 die Schwellensohle 1 zumindest vor übermäßiger mechanischer Beanspruchung durch den Gleisschotter 13 schützt.

Die Schutzschicht 15 kann ein Vlies, eine Folie, ein Gitter oder anderes sein, wie dies aus dem Stand der Technik an sich bekannt ist. Allgemein gesprochen, kann bei erfindungsgemäßen Schwellensohlen 1 wie auch Gleisanlagen 12 eine solche Schutzschicht 15 vorhanden sein aber auch weggelassen werden.

Im Allgemeinen ist es auch denkbar, dass die Schwellensohle 1 weitere Schichten mit zusätzlichen Funktionen, wie z.B. zur Schallreduktion, zur Abdichtung, zum Frost- oder Hitzeschutz etc., aufweisen kann.

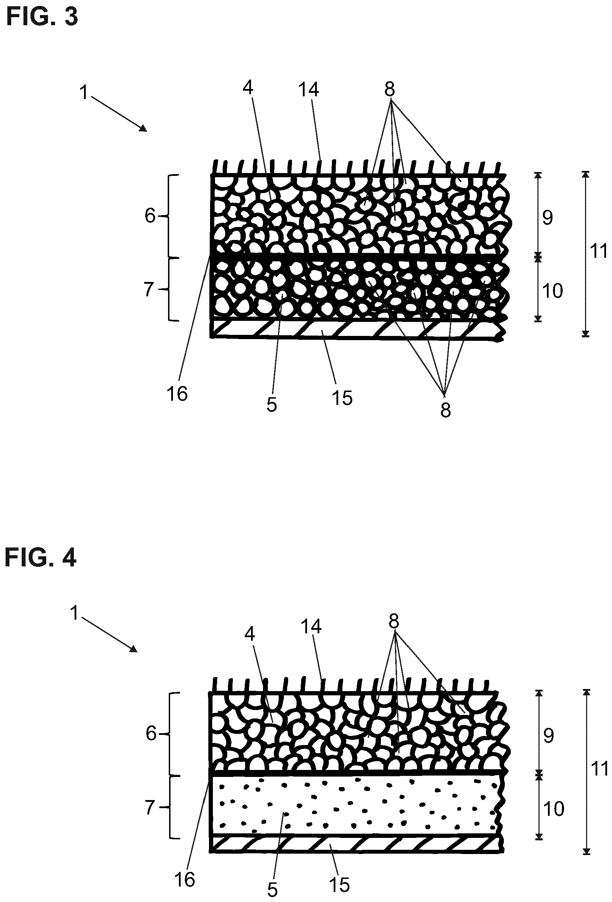

Bei der nun folgenden Beschreibung der in den Fig. 3-6 gezeigten Ausführungsbeispiele einer Schwellensohle 1 wird, soweit Unterschiede bestehen, zur Vermeidung von Wiederholungen vorrangig auf die Unterschiede zum ersten Ausführungsbeispiel gemäß Fig. 1 und 2 eingegangen. Ansonsten gilt die obige Beschreibung des ersten Ausführungsbeispiels soweit anwendbar auch für die nachfolgend noch in den Fig. 3-6 gezeigten und beschriebenen Ausführungsbeispiele einer Schwellensohle 1.

In den Fig. 3-6 ist zu sehen, dass die erste Schicht 6 und die zweite Schicht 7 vorzugsweise aneinander anliegend vollflächig miteinander verbunden, insbesondere miteinander verklebt, sind.

Bei all diesen Ausführungsbeispielen ist auch jeweils eine Schutzschicht 15 zum Schutz der Schwellensohle 1 angeordnet.

Weiters ist bei all diesen Ausführungsbeispielen eine Verbindungsschicht 14 zur Verbindung der Schwellensohle 1 mit der Gleisschwelle 3 vorhanden.

Die Verbindungsschicht 14 kann beispielsweise ein Vlies, Flock, Gitter oder dergleichen sein, welches insbesondere im unausgehärteten Zustand des Betons der Gleisschwelle 3 mit der Gleisschwelle 3 formschlüssig verbindbar ist.

Es kann auch sein, dass die Verbindungsschicht 14 eine Schicht aus Klebstoff ist.

Bei der Ausbildung einer solchen Verbindungsschicht 14 kann auf unterschiedliche, aus dem Stand der Technik an sich bekannte Varianten und Technologien zurückgegriffen werden.

Eine Verbindungsschicht 4 kann bei erfindungsgemäßen Schwellensohlen 1 vorhanden sein, ist aber nicht zwingend notwendig. Die Verbindung zwischen der Gleisschwelle 3 und der Schwellensohle 1 kann prinzipiell auch reib- bzw. kraftschlüssig erfolgen.

Weiters ist bei all den hier gezeigten Ausführungsbeispielen eine Zwischenschicht 16 zur Verbindung der ersten Schicht 6 und der zweiten Schicht 7 vorhanden.

Die Zwischenschicht 16 kann beispielsweise ein Gewebe, Klettverschluss, Vlies, Gitter oder dergleichen sein, welches die erste Schicht 6 und die zweite Schicht 7 formschlüssig miteinander verbindet.

Es kann auch sein, dass die Zwischenschicht 16 eine stoffschlüssige, beispielsweise chemische und/oder thermische, Verbindungsschicht ist, welche z.B. mittels Klebens, Verschweißens, Kaschierens, Verpressens oder dergleichen herstellbar ist.

Sowohl zum miteinander Verbinden bzw. Verkleben von gegebenenfalls vorhandenen Granulatkörnern 8 in der ersten Schicht 6 und/oder der zweiten Schicht 7 als auch zum Ankleben der Verbindungsschicht 14 und/oder der Schutzschicht 15 an der jeweiligen Schicht 6 bzw. 7 als auch zum Verkleben der Schichten 6 und 7 miteinander mittels der Zwischenschicht 16 können z.B. ein Ein-Komponenten-Polyurethanbinder wie z. B. Isocyanat, aber auch ein Zwei-Komponenten-Polyurethanbinder oder andere an sich bekannte Bindemittel oder Mischungen aus diesen Bindemitteln verwendet werden.

Es ist auch denkbar, dass die Verbindung zwischen der ersten Schicht 6 und der zweiten Schicht 7 auch reib- bzw. kraftschlüssig erfolgen kann.

Vorzugsweise weist die erste Schicht 6 eine Dicke 9 im Bereich von 3 mm bis 15 mm, vorzugsweise von 4 mm bis 12 mm, auf, insbesondere welche zwischen 40 % und 85 %, vorzugsweise zwischen 50 % und 75 %, einer Gesamtdicke 11 der Schwellensohle 1 beträgt.

Vorzugsweise weist die zweite Schicht 7 eine Dicke 10 im Bereich von 3 mm bis 10 mm, vorzugsweise von 4 mm bis 8 mm, auf, insbesondere welche zwischen 15 % und 60 %, vorzugsweise zwischen 25 % und 50 %, der Gesamtdicke 11 beträgt.

Die Fig. 3 zeigt ein Ausführungsbeispiel einer Schwellensohle 1 analog zu Fig. 2, bei welchem die zumindest eine erste Materialkomponente 4 der ersten Schicht 6 und die zumindest eine zweite Materialkomponente 5 der zweiten Schicht 7 jeweils aus miteinander verbundenen, insbesondere miteinander verklebten, Granulatkörnern 8 bestehen.

Die Fig. 4 zeigt ein Ausführungsbeispiel einer Schwellensohle 1, bei welchem die zumindest eine erste Materialkomponente 4 der ersten Schicht 6 aus miteinander verbundenen, insbesondere verklebten, Granulatkörnern 8 besteht und die zweite Materialkomponente 5 der zweiten Schicht 7 aus einem in sich homogenen Monomaterial besteht.

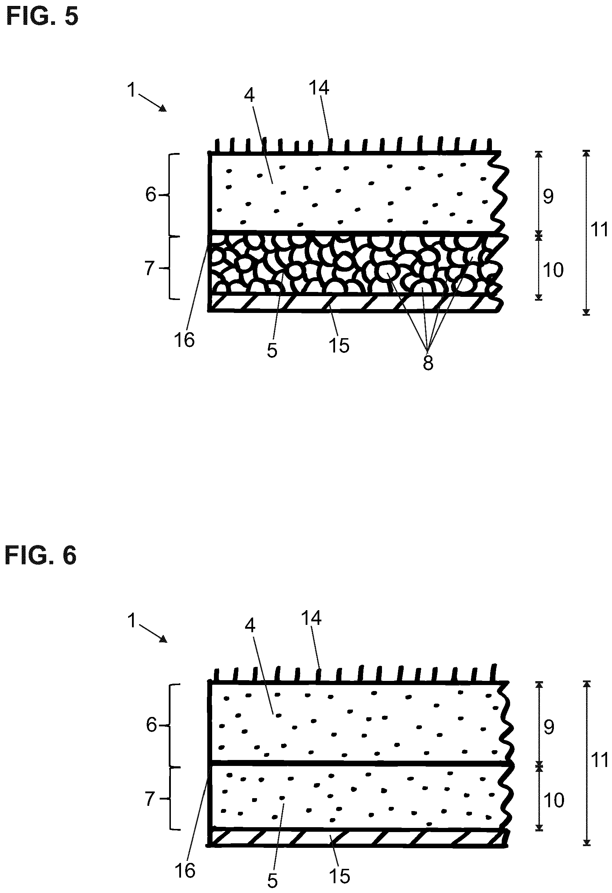

Die Fig. 5 zeigt ein Ausführungsbeispiel einer Schwellensohle 1, bei welchem die erste Materialkomponente 4 der ersten Schicht 6 aus einem Monomaterial besteht und die zweite Materialkomponente 5 der zweiten Schicht 7 aus miteinander verbundenen, insbesondere verklebten, Granulatkörnern 8 besteht.

Die Fig. 6 zeigt ein Ausführungsbeispiel einer Schwellensohle 1, bei welchem die erste Materialkomponente 4 der ersten Schicht 6 und die zweite Materialkomponente 5 der zweiten Schicht 7 jeweils aus einem Monomaterial bestehen.

### Legende zu den Hinweisziffern:

- 1: Schwellensohle
- 2: Schienen
- 3: Gleisschwelle
- 4: Erste Materialkomponente
- 5: Zweite Materialkomponente
- 6: Erste Schicht
- 7: Zweite Schicht
- 8: Granulatkörner
- 9: Dicke (der ersten Schicht)
- 10: Dicke (der zweiten Schicht)
- 11: Gesamtdicke
- 12: Gleisanlage
- 13: Gleisschotter
- 14: Verbindungsschicht
- 15: Schutzschicht
- 16: Zwischenschicht

## Patentansprüche

1. Schwellensohle (1) zur Befestigung an einer, Schienen (2) gegenüberliegenden Unterseite einer Gleisschwelle (3), wobei die Schwellensohle (1) zumindest eine erste, vorzugsweise porös ausgebildete, Materialkomponente (4) und zumindest eine, von der ersten Materialkomponente (4) verschiedene, zweite, porös ausgebildete Materialkomponente (5) aufweist, wobei die erste Materialkomponente (4) elastischer als die zweite Materialkomponente (5) und die zweite Materialkomponente (5) plastischer als die erste Materialkomponente (4) ausgebildet ist, **dadurch gekennzeichnet, dass** die erste Materialkomponente (4) ausschließlich in einer ersten Schicht (6) der Schwellensohle (1) und die zweite Materialkomponente (5) ausschließlich in einer zweiten Schicht (7) der Schwellensohle (1) angeordnet ist.

2. Schwellensohle (1) nach Anspruch 1, **dadurch gekennzeichnet, dass** in einer Betriebsstellung der Schwellensohle (1) die erste Schicht (6) der Gleisschwelle (3) zugewandt ist und die zweite Schicht (7) von der Gleisschwelle (3) abgewandt ist.

3. Schwellensohle (1) nach Anspruch 1 oder 2, **dadurch gekennzeichnet, dass** die erste Schicht (6) und die zweite Schicht (7) aneinander anliegend vollflächig miteinander verbunden, insbesondere miteinander verklebt, sind.

4. Schwellensohle (1) nach einem der Ansprüche 1 bis 3, **dadurch gekennzeichnet, dass** die erste Schicht (6) aus miteinander verbundenen, insbesondere miteinander verklebten, Granulatkörnern (8) aufgebaut ist und die Granulatkörner (8) aus der ersten Materialkomponente (4) bestehen und/oder dass die zweite Schicht (7) aus miteinander verbundenen, insbesondere miteinander verklebten, Granulatkörnern (8) aufgebaut ist und die Granulatkörner (8) aus der zweiten Materialkomponente (5) bestehen.

5. Schwellensohle (1) nach Anspruch 4, **dadurch gekennzeichnet, dass** die Granulatkörner (8) der ersten Materialkomponente (4) der ersten Schicht (9) eine Korngröße im Bereich von 1 mm bis 20 mm, vorzugsweise von 1 mm bis 12 mm, aufweisen, und/oder dass die Granulatkörner (8) der zweiten Materialkomponente (4) der zweiten Schicht (7), vorzugsweise bestehend aus Kork, eine Korngröße im Bereich von 0,1 mm bis 10 mm, vorzugsweise von 0,5 mm bis 8 mm, aufweisen und/oder dass die Granulatkörner (8) der zweiten Materialkomponente (4) der zweiten Schicht (7), vorzugsweise bestehend aus Polyurethan, eine Korngröße im Bereich von 1 mm bis 20 mm, vorzugsweise von 1 mm bis 12 mm, aufweisen.

6. Schwellensohle (1) nach einem der Ansprüche 1 bis 5, **dadurch gekennzeichnet, dass** die erste Schicht (6) als eine in sich homogene Schicht bestehend aus der ersten Materialkomponente (4) als Monomaterial ausgebildet ist und/oder dass die zweite Schicht (7) als eine in sich homogene Schicht bestehend aus der zweiten Materialkomponente (5) als Monomaterial ausgebildet ist.

7. Schwellensohle (1) nach einem der Ansprüche 1 bis 6, **dadurch gekennzeichnet, dass** die erste Schicht (6) einen kleineren Druckverformungsrest als die zweite Schicht (7) aufweist, und/oder dass die erste Schicht (6) einen Druckverformungsrest kleiner oder gleich 8 %, vorzugsweise kleiner oder gleich 6 %, aufweist, und/oder dass die zweite Schicht (7) einen Druckverformungsrest von mindestens 10 %, vorzugsweise bis zu 24,5 %, aufweist.

8. Schwellensohle (1) nach einem der Ansprüche 1 bis 7, **dadurch gekennzeichnet, dass** die erste Materialkomponente (4) ein Polyurethan, vorzugsweise mit einer Porosität im Bereich von 0 % bis 90 % ist und/oder dass die zweite Materialkomponente (5) ein poröses Polyurethan, vorzugsweise mit einer Porosität im Bereich von 2,5 % bis 90 %, und/oder dass die zweite Materialkomponente (5) ein poröser Kork, vorzugsweise mit einer Porosität im Bereich von 2,5 % bis 90 %, ist.

9. Schwellensohle (1) nach einem der Ansprüche 1 bis 8, **dadurch gekennzeichnet,**
- **dass** die erste Schicht (6) eine Dicke (9) im Bereich von 3 mm bis 15 mm, vorzugsweise von 4 mm bis 12 mm, aufweist, und/oder
- **dass** die zweite Schicht (7) eine Dicke (10) im Bereich von 3 mm bis 10 mm, vorzugsweise von 4 mm bis 8 mm, aufweist, und/oder
- **dass** die erste Schicht (6) eine Dicke (9) aufweist, welche zwischen 40 % und 85 %, vorzugsweise zwischen 50 % und 75 %, einer Gesamtdicke (11) der Schwellensohle (1) beträgt, und/oder
- **dass** die zweite Schicht (7) eine Dicke (10) aufweist, welche zwischen 15 % und 60 %, vorzugsweise zwischen 25 % und 50 %, der Gesamtdicke (11) der Schwellensohle (1) beträgt.

10. Gleisanlage (12) mit zumindest einer Gleisschwelle (3) und auf der Gleisschwelle (3) angeordneten Schienen (2) und zumindest einer unter der Gleisschwelle (3) angeordneten Schwellensohle (1) nach einem der Ansprüche 1 bis 9, wobei die erste Schicht (6) der Schwellensohle (1) der Gleisschwelle (3) zugewandt ist und die zweite Schicht (7) der Schwellensohle (1) von der Gleisschwelle (3) abgewandt ist.
